# EUROPÄISCHE PATENTSCHRIFT

(11) **EP 2 450 259 B1**
(45) Veröffentlichungstag und Bekanntmachung des Hinweises auf die Patenterteilung: **25.09.2013**
(21) Anmeldenummer: 11008683.2
(22) Anmeldetag: 29.10.2011
(51) Int. Cl.: B62D 5/04

(54) **Kraftfahrzeug mit elektrischer Hilfskraftlenkung**
Motor vehicle with electric power steering
Véhicule automobile doté d'une direction assistée électrique

(30) Priorität: 09.11.2010 DE 102010050799
(43) Veröffentlichungstag der Anmeldung: 09.05.2012
(73) Patentinhaber: Audi AG, 85045 Ingolstadt (DE); Volkswagen Aktiengesellschaft, 38440 Wolfsburg (DE)
(72) Erfinder: Müller, Rolf, 85055 Ingolstadt (DE); Schuller, Jürgen, Dr., 85055 Ingolstadt (DE); Schöttler, Frank, Dr., 38102 Braunschweig (DE)
(74) Vertreter: Patzelt, Heike Anna Maria

(56) Entgegenhaltungen:
- EP-A1- 1 511 155
- DE-A1-102005 044 875
- FR-A1- 2 493 059
- JP-A- 2002 037 112
- JP-A- 2003 174 790
- US-A1- 2004 113 575

## Beschreibung

Die Erfindung betrifft ein Kraftfahrzeug mit einer Lenkhandhabe zum Lenken zumindest eines Rades und mit einer elektrischen Maschine zum Bereitstellen eines unterstützenden Drehmoments zum Lenken des zumindest einen Rades, wobei die elektrische Maschine zumindest zwei Wicklungsgruppen hat.

Ein Kraftfahrzeug weist in an sich bekannter Weise eine Lenkhandhabe zum Lenken zumindest eines Rades auf, wobei an der Lenkhandhabe ein Lenkmoment aufgebracht wird. Eine Hilfskraftlenkung stellt zum Lenken dieses Rades ein unterstützendes Drehmoment bereit, welches zu dem Lenkmoment hinzutritt. Bei der elektrischen Hilfskraftlenkung wird das unterstützende Drehmoment von einer elektrischen Maschine aufgebracht.

Die Ansteuerung der elektrischen Maschine erfolgt üblicherweise unter Einsatz elektronischer Komponenten. Elektronische Komponenten können abrupt ausfallen; in diesem Falle entfällt spontan das unterstützende Drehmoment, was für den Fahrzeugführer nicht angenehm ist.

Eine gattungsgemäße elektrische Hilfskraftlenkung zeigt die JP2003174790A. Daraus ist bekannt, dass eine Maschine zumindest zwei Wicklungsgruppen aufweist, wobei eine Wicklungsgruppe aus drei Wicklungen gebildet wird, die den jeweiligen Phasen zugeordnet sind. Diese Wicklungsgruppen können über zwei voneinander getrennte Wechselrichter-Schaltungen mit Strom beaufschlagt werden, sodass im Notfallbetrieb eine Einheit bestehend aus Wechselrichter-Schaltung und Wicklungsgruppe durch eine andere noch funktionstüchtige Einheit aus Wechselrichter-Schaltung und Wicklungsgruppe ersetzt werden kann. Somit kann die Beaufschlagung der Maschine mit Strom auch im Notfallbetrieb weiterhin durch zumindest eine Einheit gewährleistet werden. Eine ähnliche Anordnung wird auch in der US2004113575 A1 gezeigt.

Die EP1511155 A1 beschreibt eine Steuerungseinrichtung, die aufgrund verschiedener eingehender Signale zwei voneinander unabhängige Wechselrichter Einheiten dazu veranlasst die Wicklungsgruppen mit Strom zu beaufschlagen und weist ebenfalls einen ähnlichen Aufbau auf.

Nachteilig ist, dass durch diesen Aufbau eine Redundanz nur im Bereich der Strombeaufschlagung der Wicklungsgruppen möglich ist.

Es ist Aufgabe der Erfindung, die Ausfallsicherheit der Hilfskraftlenkung bei einem Kraftfahrzeug der eingangs genannten Gattung weiter zu erhöhen.

Die Aufgabe wird durch ein Kraftfahrzeug mit den Merkmalen gemäß Patentanspruch 1 gelöst.

Erfindungsgemäß erfolgt die Beaufschlagung mit elektrischem Strom der zwei an sich bekannten Wicklungsgruppen durch zumindest teilweise voneinander getrennte Einheiten wobei jeder Wicklungsgruppe eine gesonderte Datenverarbeitungseinrichtung zum Ermitteln des Umfangs der Beaufschlagung mit elektrischem Strom zugeordnet ist, und wobei diese gesonderten Datenverarbeitungseinrichtungen gemeinsam durch eine Überwachungseinrichtung überwacht werden.

Jede der voneinander getrennten Einheiten, die eine zugehörige Wicklungsgruppe mit Strom beaufschlagen, umfasst eine gesonderte Datenverarbeitungseinrichtung zum Ermitteln des Umfangs der Beaufschlagung mit elektrischem Strom. Es besteht somit Redundanz sogar im Bereich von Datenverarbeitungseinrichtungen; selbst, wenn eine ganze Datenverarbeitungseinrichtung ausfällt, arbeitet die andere Datenverarbeitungseinrichtung noch weiter, sodass eine Wicklungsgruppe der elektrischen Maschine nach wie vor mit elektrischem Strom beaufschlagt wird und auch die Ermittlung des Umfangs der Beaufschlagung weiterhin gewährleistet ist. Die Trennung der beiden Einheiten voneinander besteht insbesondere im gesonderten Bereitstellen jeweils gleichartiger Bauteile. Man kann aber Synergieeffekte nutzen. So ist es bekannt, für die Datenverarbeitungseinrichtung eine weitere, typischerweise eine geringere Rechenleistung als die Datenverarbeitungseinrichtung aufweisende Überwachungseinrichtung vorzusehen, die die Datenverarbeitungseinrichtung überwacht. Vorliegend genügt es, für die Datenverarbeitungseinrichtung in beiden Einheiten gemeinsam lediglich eine Überwachungseinrichtung vorzusehen; es werden hierbei Kosten, Gewicht und Platz eingespart. Die Überwachungseinrichtung hat zudem die Aufgabe, die Ansteuerung beider Einrichtungen zeitlich zu synchronisieren.

In einer bevorzugten Ausführungsform umfasst jede Einheit eine der Datenverarbeitungseinrichtung nachgeordnete Leistungselektronik, die aufgrund von Ausgangssignalen der Datenverarbeitungseinrichtung eine Beaufschlagung des Elektromotors mit Strom zu bewirken ausgelegt ist. Typischerweise wandelt die Leistungselektronik die von der Datenverarbeitungseinrichtung abgegebenen Steuersignale zunächst in Steuersignale für Transistoren in der Leistungselektronik um, und aufgrund dieser Steuersignale kommt es dann zum Fließen von elektrischem Strom über die Wicklungen des Elektromotors.

Die Datenverarbeitungseinrichtungen sollen ja voneinander unabhängig arbeiten können. Es ist bevorzugt hierzu vorgesehen, dass jede Datenverarbeitungseinrichtung der beiden Einheiten mit denselben Sensoren gekoppelt ist. Typischerweise gibt es als Sensoren den Lenkmomentensensor, der das an der Lenkhandhabe aufgebrachte Lenkmoment misst, und es gibt einen Rotorlagesensor, der die Drehlage (Winkelstellung) eines Rotors der elektrischen Maschine erfasst, wobei auf diese Drehlage z. B. geregelt wird.

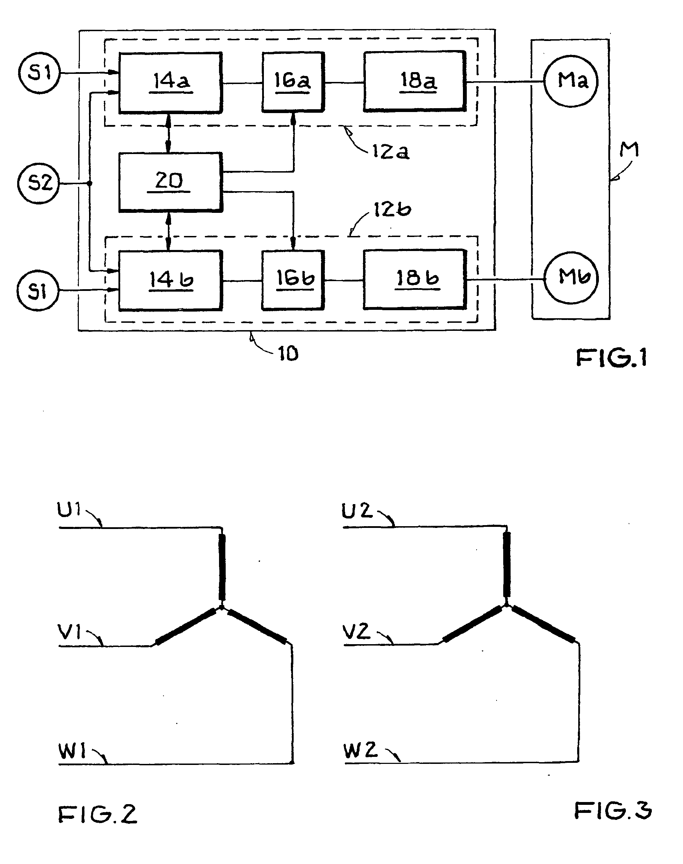

Nachfolgend wird eine bevorzugte Ausführungsform der Erfindung unter Bezug auf die Zeichnung näher beschrieben, in der
- Fig. 1: eine schematische Darstellung der Anordnung für eine Hilfskraftlenkung in einem erfindungsgemäßen Kraftfahrzeug ist und
- Fig. 2: und
- Fig. 3: die bei der Anordnung aus Fig. 1 gegebenen Verschaltungen veranschaulichen.

In einem im Ganzen in den Figuren nicht gezeigten Kraftfahrzeug wird ein Elektromotor M, der vorliegend als Drei-Phasen-Motor ausgebildet ist, ein unterstützendes Drehmoment zum Lenken zumindest eines in der Figur nicht gezeigten Rades bereitgestellt, das zu dem an einer Lenkhandhabe aufgebrachten Lenkmoment hinzutritt. Die Beaufschlagung des Elektromotors M erfolgt in Abhängigkeit von Sensorsignalen, die durch Sensoren S1 und S2 gemessen werden. Der Sensor S1 misst hierbei das an der Lenkhandhabe aufgebrachte Lenkmoment (Drehmoment), der Sensor S2 die Winkelstellung eines in der Figur nicht gezeigten Elektromotors. Die mit 10 bezeichnete Einheit kann als (Steuer-)Gerät ausgebildet sein oder lediglich in Form einer Schaltungsanordnung bereitgestellt sein.

Die elektrische Maschine M weist vorliegend zwei voneinander getrennte Wicklungsgruppen Ma und Mb auf. Jede Wicklungsgruppe kann gesondert mit Strom beaufschlagt werden. Die Wicklungsgruppe Ma wird von einer Einheit 12a mit Strom beaufschlagt, die Wicklungsgruppe Mb von einer Einheit 12b mit Strom beaufschlagt.

In an sich bekannter Weise werden die Sensorsignale S1 und S2 von einer Datenverarbeitungseinrichtung 14a verarbeitet, die Steuersignale an eine sog. Gate Drive Unit (GDU) 16a abgibt, welche die Aufgabe des Umwandelns der Steuersignale in Steuersignale für Transistoren 18a hat. Durch geeignete Schaltung der Transistoren fließt dann ein entsprechender Strom über die Wicklung Ma des Elektromotors M. Die GDU 16a bildet als Einrichtung zum Wandeln gemeinsam mit den zugehörigen Transistoren 18a eine Leistungselektronik.

Genauso gibt es eine Datenverarbeitungseinrichtung 14b, die die Signale der Sensoren S1 und S2 empfängt, Steuersignale an eine Gate Drive Unit 16b weitergibt, die wiederum Transistoren 18b ansteuert. Durch geeignete Schaltung der Transistoren 18b fließt dann ein entsprechender Strom über die Wicklung Mb des Elektromotors. Die GDU 16a bildet als Einrichtung zum Wandeln gemeinsam mit den zugehörigen Transistoren 18b eine Leistungselektronik.

Die beiden Datenverarbeitungseinrichtungen 14a und 14b werden von einem Überwachungsrechner 20 überwacht und zeitlich synchronisiert, der auch die GDUs 16a und 16b abschalten kann.

Die Transistoren 18a bewirken vorliegend das Fließen von Strom in den entsprechenden Phasen über die Leitungen U1, V1 und W1, denen jeweils eine Wicklung der Wicklungsgruppe Ma entspricht. Diese Wicklungen sind in einer Sternschaltung für die Wicklungsgruppe Ma zusammengeführt. Genauso bewirken die Transistoren 18b vorliegend das Fließen von Strom in den entsprechenden Phasen über die Leitungen U2, V2, W2, denen jeweils eine Wicklung der Wicklungsgruppe Mb entspricht. Auch diese Wicklungen sind in einer Sternschaltung verkoppelt und bilden die Wicklungsgruppe Mb.

Das Vorsehen der beiden Wicklungsgruppen Ma und Mb, die durch jeweils gesonderte Einheiten 12a und 12b mit Strom beaufschlagt werden können, hat den Vorteil, dass bei Ausfall einer der beiden Einheiten 12a, 12b bzw. eines Bauteils dieser Einheiten 12a, 12b zumindest die der ausfallenden Einheit nicht zugehörige Wicklungsgruppe noch mit Strom beaufschlagt wird. Gegebenenfalls kann die Überwachungseinrichtung 20 sogar durch Übermittlung entsprechender Signale an die jeweilige Datenverarbeitungseinrichtung 14a, 14b bewirken, dass die Stromstärke des von der jeweiligen Einheit 12a, 12b zu fließen bewirkten Stroms erhöht wird, wenn die jeweils andere Einheit 12b, 12a ausgefallen ist.

Anders als in den Figuren dargestellt, werden wie an sich bekannt und üblich die Sensoren S1 und S2 jeweils zweifach bereitgestellt, um auch im Bereich der Sensorik für eine Redundanz zu sorgen, damit eine erhöhte Ausfallsicherheit gegeben ist.

## Patentansprüche

1. Kraftfahrzeug mit einer Lenkhandhabe zum Lenken zumindest eines Rades und mit einer elektrischen Maschine (M) zum Bereitstellen eines unterstützenden Drehmoments zum Lenken des zumindest einen Rades,
wobei
die elektrische Maschine (M) zumindest zwei Wicklungsgruppen (Ma, Mb) hat, deren Beaufschlagung mit elektrischem Strom durch zumindest teilweise voneinander getrennte Einheiten (12a, 12b) erfolgt, und **dadurch gekennzeichnet, daß** jeder Wicklungsgruppe (Ma, Mb) eine gesonderte Datenverarbeitungseinrichtung (14a, 14b) zum Ermitteln des Umfangs der Beaufschlagung mit elektrischem Strom zugeordnet ist, und wobei diese gesonderten Datenverarbeitungseinrichtungen (14a, 14b) gemeinsam durch eine Überwachungseinrichtung (20) überwacht werden.

2. Kraftfahrzeug nach Anspruch1 ,
**dadurch gekennzeichnet, dass**
jeder gesonderten Datenverarbeitungseinrichtung (14a, 14b) eine eigene Leistungselektronik (18a; 16b, 18b) nachgeordnet ist, die aufgrund von Ausgangssignalen der Datenverarbeitungseinrichtung eine Beaufschlagung der zugehörigen Wicklungsgruppe mit Strom zu bewirken ausgelegt ist.

3. Kraftfahrzeug nach Anspruch 1 oder 2,
**dadurch gekennzeichnet, dass**
jede gesonderte Datenverarbeitungseinrichtung (14a, 14b) mit den gleichen Sensoren (S1, S2) gekoppelt ist.

## Claims

1. Motor vehicle comprising a steering handle for steering at least one wheel and comprising an electric machine (M) for providing an auxiliary torque for steering the at least one wheel, the electric machine (M) having at least two winding groups (Ma, Mb) to which electric current is applied by units (12a, 12b) which are separated from one another at least in part, and **characterised in that** each winding group (Ma, Mb) is allocated a separate data processing device (14a, 14b) for determining the extent of the application of electric current, and these separate data processing devices (14a, 14b) being monitored together by a monitoring device (20).

2. Motor vehicle according to claim 1, **characterised in that** each separate data processing device (14a, 14b) has its own power electronics (18a; 16b, 18b) arranged downstream thereof which is designed to bring about application of current to the associated winding group on the basis of output signals from the data processing device.

3. Motor vehicle according to either claim 1 or claim 2, **characterised in that** each separate data processing device (14a, 14b) is coupled to the same sensors (S1, S2).

## Revendications

1. Véhicule automobile avec une manette de direction pour orienter au moins une roue et avec une machine électrique (M) pour fournir un couple de soutien pour orienter l'au moins une roue,
dans lequel la machine électrique (M) a au moins deux groupes d'enroulements (Ma, Mb) dont l'alimentation en courant électrique est effectuée par des unités (12a, 12b) au moins partiellement séparées l'une de l'autre,
**caractérisé en ce qu'**il est associé à chaque groupe d'enroulements (Ma, Mb) un dispositif de traitement de données particulier (14a, 14b) pour déterminer l'étendue de l'alimentation en courant électrique, ces dispositifs de traitement de données particuliers (14a, 14b) étant surveillés conjointement par un dispositif de surveillance (20).

2. Véhicule automobile selon la revendication 1, **caractérisé en ce qu'**une unité électronique de puissance particulière (18a ; 16b, 18b) est placée en aval de chaque dispositif de traitement de données particulier (14a, 14b), laquelle unité électronique de puissance est conçue pour provoquer, en fonction de signaux de sortie du dispositif de traitement de données, une alimentation en courant du groupe d'enroulements associé.

3. Véhicule automobile selon la revendication 1 ou 2, **caractérisé en ce que** chaque dispositif de traitement de données particulier (14a, 14b) est couplé aux mêmes capteurs (S1, S2).
